(19) Europäisches Patentamt
European Patent Office
Office européen des brevets

(11) **EP 4 712 427 A1**

(12) **EUROPEAN PATENT APPLICATION**

(43) Date of publication:
**18.03.2026 Bulletin 2026/12**

(21) Application number: **25202064.9**

(22) Date of filing: **15.09.2025**

(51) International Patent Classification (IPC):
*H04L 43/026* (2022.01)     *H04L 43/028* (2022.01)
*H04L 47/20* (2022.01)

(52) Cooperative Patent Classification (CPC):
**H04L 43/028; H04L 43/026;** H04L 47/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **16.09.2024 US 202418886439**

(71) Applicant: **Arista Networks, Inc.
Santa Clara, CA 95054 (US)**

(72) Inventor: **PADUVALLI, Ramakrishna
Saratoga, CA (US)**

(74) Representative: **Hoffmann Eitle
Patent- und Rechtsanwälte PartmbB
Arabellastraße 30
81925 München (DE)**

(54) **RESOLVING GOTO ACTIONS IN A TRAFFIC POLICY USING CASCADED TABLE LOOKUPS**

(57)     A traffic policy includes policy rules (terminal rules) that do not include GOTO actions in their action sets and policy rules (GOTO rules) that do include GOTO actions in their action sets. The traffic policy is grouped into segments based on the GOTO rules. The terminal rules in the traffic policy are programmed into a first hardware table as key-value pairs, where the value component of a terminal rule encodes link information that identifies the segment of the terminal rule. The GOTO rules are flattened to produce a set of flattened rules, which are then programmed into a second hardware table. The key component of each flattened rule encodes a mask based on the segment of a GOTO rule represented by the flattened rule.

```
receive traffic policy, 502
        ↓
group policy rules into segments, 504
        ↓
assign segment IDs, 506
        ↓
encode and program terminal rules with segment IDs, 508
        ↓
revise policy GOTO rules with segment masks, 510
        ↓
flatten policy GOTO rules, 512
        ↓
encode flattened (intersection) rules with segment masks
and program, 514
```

FIG. 5

EP 4 712 427 A1

**Description**

CROSS REFERENCE TO RELATED APPLICATIONS

This application is related to commonly owned, pending U.S. App. No. 17/476,352, filed September 15, 2021 and U.S. App. No. 17/844,255, filed June 20, 2022, the content of both of which are incorporated herein by reference in their entirety for all purposes.

BACKGROUND

A network traffic policy is used to identify packets (ingress or egress) for processing. The traffic policy is an ordered list of policy rules. Each rule includes match criteria to match on the contents of a packet such as its headers, payload, etc. Each rule further includes a set of actions that are applied in connection with the packet when a packet matches the rule; e.g., increment counter(s), drop the packet, edit the packet (edit address, edit payload, etc.), do-nothing, etc. Generally, the policy rules in a traffic policy are prioritized; i.e., the rules are searched starting at the beginning of the list, and the first rule in the policy that matches a given packet will be executed (i.e., the actions are performed) and no further search of the traffic policy is made.

The traffic policy rules are defined by a user (e.g., network administrator). The traffic policy can be downloaded to a network device where the policy rules are processed (encoded) to create a list of encoded rules (also referred to as packet filters) that can then be programmed into hardware lookup tables in the network device. The hardware lookup tables process a packet against the encoded rules to find a match. The encoded rules are searched in the same order as their corresponding policy rules in the traffic policy. Actions associated with the first rule that matches the packet are applied to the packet, and the hardware lookup tables terminate processing for that packet.

In order to provide more flexibility in designing a traffic policy, a GOTO NEXT (GOTO) action, sometimes referred to as a CONTINUE action, has been included in the language for specifying policy rules. The GOTO action is performed in connection with a matched packet just like any other action. The flow semantics of the GOTO action is as follows: when a policy rule is matched, actions in the action set of the matched policy rule are performed. If the action set in the matched rule does not include the GOTO action, then the matching operation terminates. On the other hand, if the action set does include the GOTO action, then the matching operation continues with the next rule in the traffic policy that follows the matched rule. If we match another rule and it contains the GOTO action, then that matched rule is processed and again the matching operation continues, and so on.

An example of a use-case for the GOTO action is where a broad match criterion is used to perform some action(s) on a broad category of packets and perform specific actions for certain packets in that category. For example, the user may want to increment a counter on all packets in the 192.0.0.0 domain, but drop packets in that domain destined for 192.0.0.128. A rule can be defined to match on 192.0.0.0 and have an action set that increments a counter and includes the GOTO action. Another rule further down in the traffic policy can match on 192.0.0.128 to drop matching packets.

BRIEF DESCRIPTION OF THE DRAWINGS

With respect to the discussion to follow and in particular to the drawings, it is stressed that the particulars shown represent examples for purposes of illustrative discussion, and are presented in the cause of providing a description of principles and conceptual aspects of the present disclosure. In this regard, no attempt is made to show implementation details beyond what is needed for a fundamental understanding of the present disclosure. The discussion to follow, in conjunction with the drawings, makes apparent to those of skill in the art how embodiments in accordance with the present disclosure may be practiced. Similar or same reference numbers may be used to identify or otherwise refer to similar or same elements in the various drawings and supporting descriptions. In the accompanying drawings:

FIG. 1 is an illustrative representation of a network device adapted in accordance with the present disclosure.

FIG. 2 is an illustrative representation of a traffic policy.

FIG. 3 is an illustrative representation of a packet processor in accordance with some embodiments.

FIG. 4 is an illustrative representation of programming a traffic policy having GOTO rules in accordance with some embodiments.

FIG. 5 is an illustrative representation of a flow of operations for programming a traffic policy having GOTO rules in accordance with some embodiments.

FIG. 6 is an illustrative representation of segmenting a traffic policy in accordance with some embodiments.

FIG. 7 is an illustrative representation of programming terminal rules in accordance with some embodiments.

FIG. 8 is an illustrative representation of revising GOTO rules in accordance with some embodiments.

FIG. 9 is an illustrative representation of programming GOTO rules in accordance with some embodiments.

FIG. 10 illustrates some use cases for matching packets in accordance with the present disclosure.

Fig. 11 illustrates programming a traffic policy in some embodiments.

DETAILED DESCRIPTION

The present disclosure is directed to resolving GOTO actions in the policy rules of a traffic policy to produce a set of encoded rules that can be programmed in the HW tables of a network device. The traffic policy contains a prioritized list of policy rules expressed in human-readable form. A policy rule can be a *terminal* rule, which does not include a GOTO action, or a *GOTO* (branch) rule which does include a GOTO action.
In various embodiments, the prioritized list of policy rules can be divided into segments (sub-lists). Each segment begins with one GOTO rule followed by one or more terminal rules. Each segment is associated with an n-bit identifier. For discussion purposes, we will use a 3-bit identifier. The initial segment ($0^{th}$ segment) will be identified with all 3 bits set to '0'. The next segment ($1^{st}$ segment) will be identified with the least significant bit set to '1'. The $2^{nd}$ segment will be identified with the 2 LSBs set to '1', and in general the $n^{th}$ segment will be identified with the n least significant bits set to '1'.
In some embodiments, an intermediate representation of the policy rules (intermediate rules) can be generated using the identified segments. Two hardware tables (HW table 1 and HW table 2) are then programmed based on the intermediate rules. The intermediate rules can be generated as described below. Each intermediate rule corresponds to one or more policy rules and comprises match criteria and an action set. Each intermediate rule is a *key-value* data pair:

- intermediate terminal rules:

    ○ an intermediate terminal rule represents a terminal rule
    ○ the *key* component encodes the match criteria of the corresponding terminal rule
    ○ the *value* component encodes (1) the action set of the corresponding terminal rule and (2) the segment identifier of the segment that the terminal rule belongs to
    ○ the intermediate terminal rules can be programmed into a first HW table

- intermediate GOTO rules:

    ○ an intermediate GOTO rule represents one or more GOTO rules
    ○ the set of intermediate GOTO rules collectively represent the GOTO rules in flattened form
    ○ the *key* component of an intermediate GOTO rule encodes (1) the match criteria of the one or more corresponding GOTO rules and (2) a mask of the segment identifier of one of the one or more corresponding GOTO rules. The mask of a segment ID is produced by changing each '0' bit in the segment ID to a don't-care bit represented as 'X'
    ○ the *value* component encodes the action set of the GOTO rule, including the GOTO action
    ○ the intermediate GOTO rules can be programmed into HW table 2.

In the following description, for purposes of explanation, numerous examples and specific details are set forth in order to provide a thorough understanding of embodiments of the present disclosure. Particular embodiments as expressed in the claims may include some or all of the features in these examples, alone or in combination with other features described below, and may further include modifications and equivalents of the features and concepts described herein.

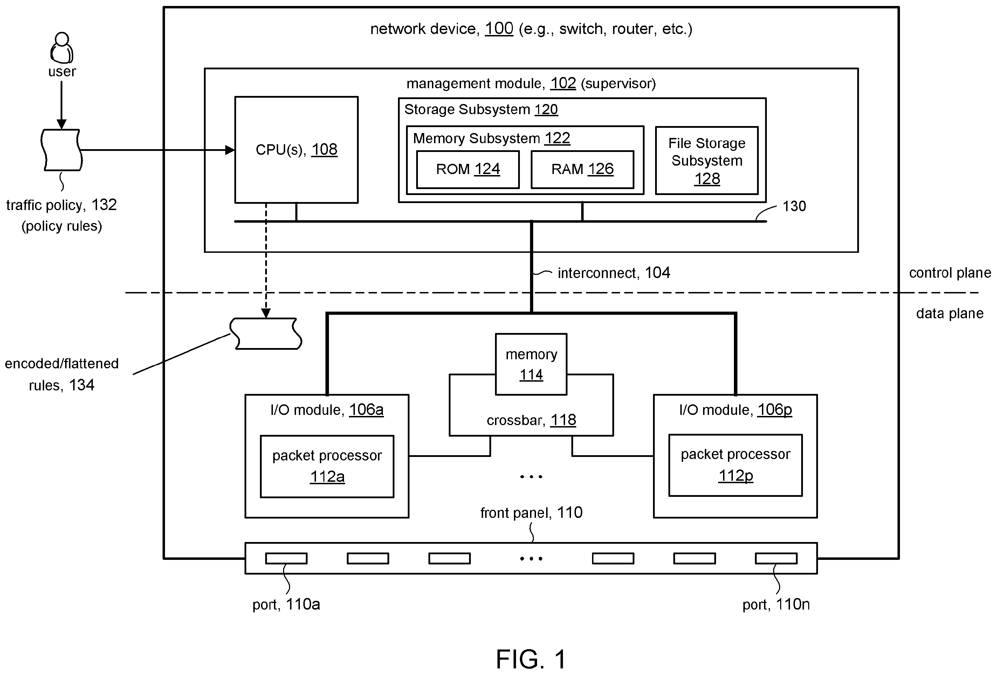

FIG. 1 is a schematic representation of a network device 100 (e.g., a router, switch, firewall, and the like) that can be adapted in accordance with the present disclosure. In some embodiments, for example, network device 100 can include one or more management modules 102 (also referred to as supervisors), one or more I/O modules (switches, switch chips) 106a - 106p, and a front panel 110 of I/O ports (physical interfaces, I/Fs) 110a - 110n. Management module 102 can constitute the control plane of network device 100 (also referred to as the control layer or simply the central processing unit, CPU), and can include CPU(s) 108 for managing and controlling operation of network device 100 in accordance with the present disclosure. CPU(s) 108 can be a general-purpose processor, such as an Intel®/AMD® x86, ARM® microprocessor and the like, that operates under the control of software stored in a memory device/chips such as read-only memory (ROM) 124 or random-access memory (RAM) 126. The control plane provides services that include traffic management functions such as routing, security, load balancing, analysis, and the like.
CPU(s) 108 can communicate with storage subsystem 120 via bus subsystem 130. Other subsystems, such as a network interface subsystem (not shown in FIG. 1), may be on bus subsystem 130. Storage subsystem 120 can include memory subsystem 122 and file/disk storage subsystem 128. Memory subsystem 122 and file/disk storage subsystem 128 represent examples of non-transitory computer-readable storage devices that can store program code and/or data, which when executed by CPU(s) 108, can cause CPU(s) 108 to perform operations in accordance with embodiments of the present disclosure. In accordance with the present disclosure, operations can include receiving a user-provided traffic policy 132 and encoding the traffic policy to produce encoded rules 134, which can then be programmed into hardware tables in the I/O modules 106.

Memory subsystem 122 can include a number of memories such as main RAM 126 (e.g., static RAM, dynamic RAM, etc.) for storage of instructions and data during program execution, and ROM (read-only memory) 124 on which fixed instructions and data can be stored. File storage subsystem 128 can provide persistent (i.e., non-volatile) storage for program and data files, and can include storage technologies such as solid-state drive and/or other types of storage media known in the art.

CPU(s) 108 can run a network operating system stored in storage subsystem 120. A network operating system is a specialized operating system for network device 100. For example, the network operating system can be the Arista EOS® operating system, which is a fully programmable and highly modular, Linux-based network operating system developed and sold/licensed by Arista Networks, Inc. of Santa Clara, California. It is understood that other network operating systems may be used.

Bus subsystem 130 can provide a mechanism for the various components and subsystems of management module 102 to communicate with each other as intended. Although bus subsystem 130 is shown schematically as a single bus, alternative embodiments of the bus subsystem can utilize multiple buses.

The one or more I/O modules 106a - 106p can be collectively referred to as the data plane of network device 100 (also referred to as the data layer, forwarding plane, etc.). Interconnect 104 represents interconnections between modules in the control plane and modules in the data plane. Interconnect 104 can be any suitable bus architecture such as Peripheral Component Interconnect Express (PCIe), System Management Bus (SMBus), Inter-Integrated Circuit (I²C), etc.

I/O modules 106a - 106p can include respective packet processing hardware comprising packet processors 112a - 112p (collectively 112) to provide packet processing and forwarding capability. Each I/O module 106a - 106p can be further configured to communicate over one or more ports 110a - 110n on the front panel 110 to receive and forward network traffic. Packet processors 112 can comprise hardware (circuitry), including for example, data processing hardware such as an application specific integrated circuit (ASIC), field programmable gate array (FPGA), processing unit, and the like, which can be configured to operate in accordance with the present disclosure. Packet processors 112 can include forwarding lookup hardware (hardware, HW lookup tables, etc.) such as, for example, but not limited to content addressable memory such as ternary CAMs (TCAMs), auxiliary memory such as static RAM (SRAM), and the like.

Memory hardware 114 can include buffers used for queueing packets. I/O modules 106a - 106p can access memory hardware 114 via crossbar 118. It is noted that in other embodiments, the memory hardware 114 can be incorporated into each I/O module. The forwarding hardware in conjunction with the lookup hardware can provide wire speed decisions on how to process ingress packets and outgoing packets for egress. In accordance with some embodiments, some aspects of the present disclosure can be performed wholly within the data plane.

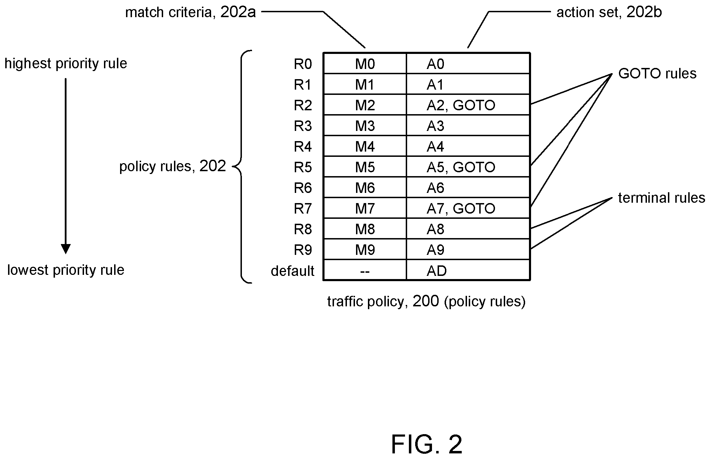

FIG. 2 illustrates details of a traffic policy. Traffic policies are known; as such, only a brief high level description of relevant aspects of a traffic policy is described. Traffic policy 200 is an illustrative representation of a traffic policy, and will serve as an example in the description of different aspects of the present disclosure that follow. Traffic policy 200 comprises policy rules 202, which include rules R0 to R9 and a default policy rule. Each rule, except the default rule, includes match criteria 202a and corresponding action set 202b. The match criteria 202a for rule R0, collectively represented as M0, can comprise attributes of a packet to be matched, such as media access control (MAC) addresses, Internet protocol (IP) addresses, protocol type, data in the payload of the packet, and so on.

The match criteria serve as the search key for matching on a rule in the traffic policy. For example, suppose match criteria M0 in policy rule R0 comprises the criterion:

$$\text{source IP} = 192.1.1.10.$$

A packet would match R0 if the source IP address in its header is "192.1.1.10". Multiple match criteria are logically AND'd. For example, if M0 comprises the following criteria:

$$\text{destination IP} = 238.0.0.0$$

$$\text{destination port} = 23,$$

a packet would match R0 only if the packet's destination IP is "238.0.0.0" and the destination port is "23".

The action set 202b of rule R0, collectively represented as A0, can comprise one or more actions that are performed (executed) for a matched rule. Actions can include operations such as increment counters, set/unset flags, edit the packet, etc. The GOTO action in the action set of a matched rule causes rule matching to continue with the rule following the matched rule. For example, policy rule R2 includes match criteria M2 and action set A2 plus the additional GOTO action. If a packet matches the criteria represented by M2, then the one or more actions represented by A2 and the GOTO action are executed. The GOTO action indicates to continue searching the traffic policy with rule R3, the rule following the matched rule R2.

A rule 202 can be referred to as a *terminal* type rule if its action set does not include the GOTO action. A rule that does include the GOTO action can be referred to as a *GOTO* type rule; sometimes referred to as a continuation rule, a branch rule, etc.

The list of policy rules 202 in traffic policy 200 are prioritized in order of highest priority (rule R0) to lowest priority (rule R9). The search begins with the first rule in the list (rule R0) and proceeds sequentially down the list. The rules are prioritized in that the first rule that is matched is executed; i.e., the action(s) in its action set are performed. If the matched rule is a terminal rule, then no further rules are searched and the search terminates. If the matched rule is a GOTO rule, then its action set is executed and the search continues with the rule following the matched rule.

The default rule serves as a catch all if the packet does not match any of the other rules. If no rules match the packet, then the default rule is the result of the search and any actions in the default action set AD are executed.

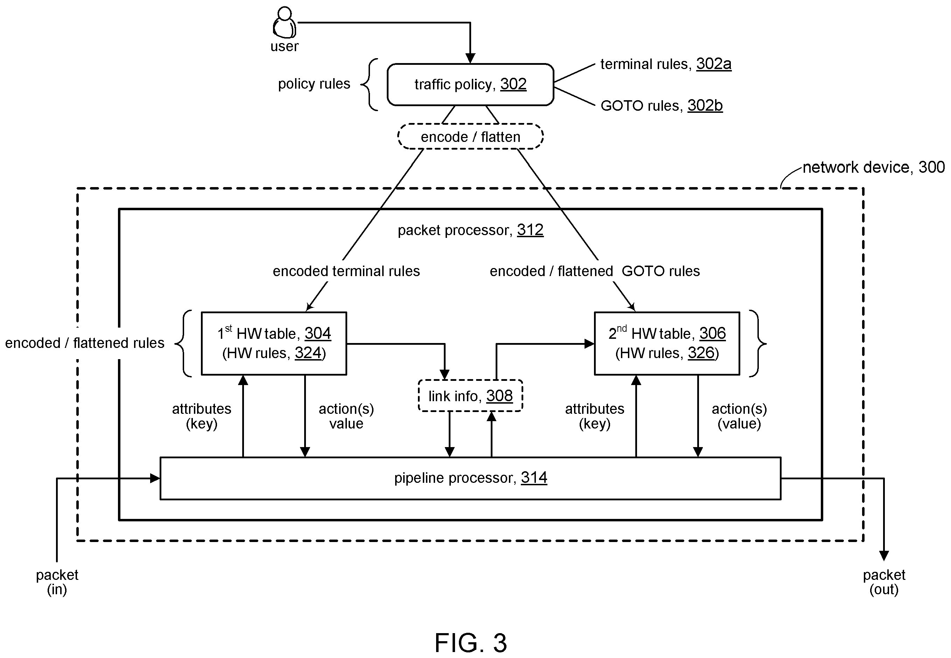

FIG. 3 shows high level details of packet processing in a network device 300 in accordance with some embodiments of the present disclosure. Packets can be processed by a packet processor 312 in accordance with traffic policy 302 provided by a user (e.g., network administrator). The policy rules in the traffic policy can be encoded/flattened and programmed into hardware (HW) lookup tables 304, 306 in packet processor 312. In some embodiments, the terminal rules 302a in traffic policy 302 can be encoded and programmed into one HW table 304 as first HW rules 324, and the GOTO rules 302b can be encoded/flattened and programmed into another HW table 306 as second HW (intersection) rules 326. The expression "HW rules" will refer to the encoded policy rules stored in hardware tables 304, 306 as compared to the user-provided policy rules in the traffic policy.

A packet can be received by pipeline processor circuitry 314 and processed in pipeline fashion. The pipeline processor 314 can apply the packet to the first HW table 304 to produce a first HW rule 324 (result). Actions associated with the matched HW rule can be performed. In accordance with the present disclosure, the pipeline processor can apply the packet along with link information 308 (described below) contained in the matched rule to the second HW table 306 to obtain a second HW rule 326 (result). Actions associated with the matched HW rule can be performed. The packet can then exit the pipeline processor 314 and proceed to the next stage of processing in network device 300.

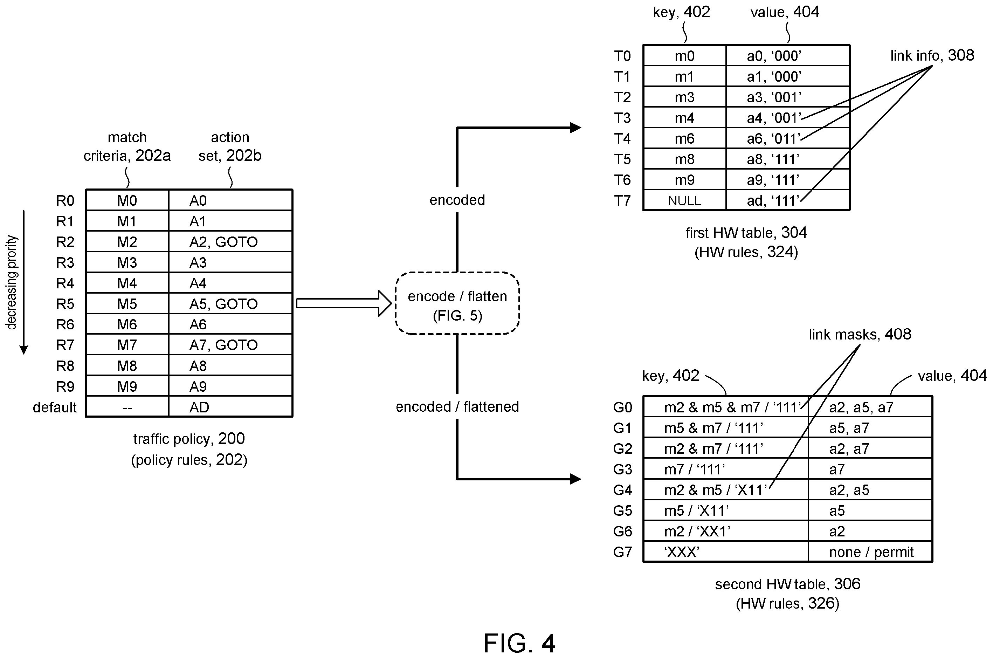

FIG. 4 shows details of HW tables 304, 306 (FIG. 3) in accordance with some embodiments. HW tables 304, 306 contain an encoded and flattened representation of the traffic policy 200 generated in accordance with the present disclosure. HW tables 304, 306 comprise HW rules 324, 326 respectively. Each HW rule 324, 326 comprises a key component 402 and a value component 404. Key component 402 encodes the match criteria 202a of one or more of the policy rules 202, and the value component 404 encodes the actions in the corresponding action sets 202b of the one or more of the policy rules 202. While the match criteria 202a and action sets 202b may be expressed in human-readable form (e.g., ascii text), the key and value components 402, 404 can represent (encode) the match criteria and action sets in a suitable machine-readable format for the HW tables 304, 306, for example, as binary data ('0' or '1') or tri-state data ('0', '1', "don't care").

In accordance with some embodiments, the first HW table 304 represents the terminal rules in traffic policy 200. HW rules 324 in the first HW table correspond to respective terminal policy rules in traffic policy 200. For example, HW rule T0 corresponds to and is an encoded representation of terminal rule R0, rule T1 corresponds to and is an encoded representation of terminal rule R1, rule T2 corresponds to and is an encoded representation of terminal rule R3, and so on as shown in FIG. 4. Further in accordance with some embodiments, HW rules 324, as they are stored in HW table 304, preserve the relative order (priority) as their corresponding terminal rules. The key component 402 of each HW rule 324 encodes the match criteria 202a of the corresponding terminal rule. Likewise, the value component 404 of each HW rule encodes the action set of the corresponding terminal rule. In accordance with the present disclosure, the value component 404 further encodes link information 308. This aspect of the present disclosure is discussed in more detail below.

In some embodiments, the second HW table 306 represents the GOTO rules in traffic policy 200. Each HW rule 326 in HW table 306 represents a combination of one or more of the GOTO rules in traffic policy 200. For example, HW rule G0 represents a combination of GOTO rules R2, R5, and R7 as indicated by the combined match criteria and combined actions. Likewise, rule G1 represents a combination of GOTO rules R5 and R7, rule G2 represents a combination of GOTO rules R2 and R7, and so on as shown in FIG. 4. The key component 402 of each HW rule 326 in HW table 306 encodes the match criteria 202a of the corresponding combination of GOTO rules that the HW rule represents. In accordance with the present disclosure, the key component 402 further encodes a link mask 408. The value component 404 of each rule encodes the action sets of the corresponding combination of GOTO rules. These aspects of the present disclosure are discussed in more detail below.

The policy rules are "encoded" in that the rules are translated or otherwise converted from human-readable form (e.g., ascii text) into a suitable machine-format that can be stored and consumed by the hardware lookup tables; e.g., HW tables 304, 306.

The GOTO policy rules are also "flattened" as part of being converted to machine-format. The flow of a matched GOTO rule can be imagined as "branching" back to the list of policy rules to continue searching down the list after executing the action set of the matched GOTO rule. By comparison, because a terminal rule exits after executing its action set, the flow of a terminal rule can be viewed as being "flat" in the sense that the rule does not branch back into the list of policy rules but simply exists the search. For performance reasons, hardware lookup tables are generally optimized to stop on the first matching rule, output the matched rule as a result of the match, and exit. Hardware lookup tables are not designed to explicitly perform the branching operation of a GOTO action. As such, the GOTO rules in the traffic policy are resolved (flattened) to produce a corresponding set of flattened policy rules, that have the same flow semantics as in the original traffic policy, so they can be programmed in the hardware lookup tables.

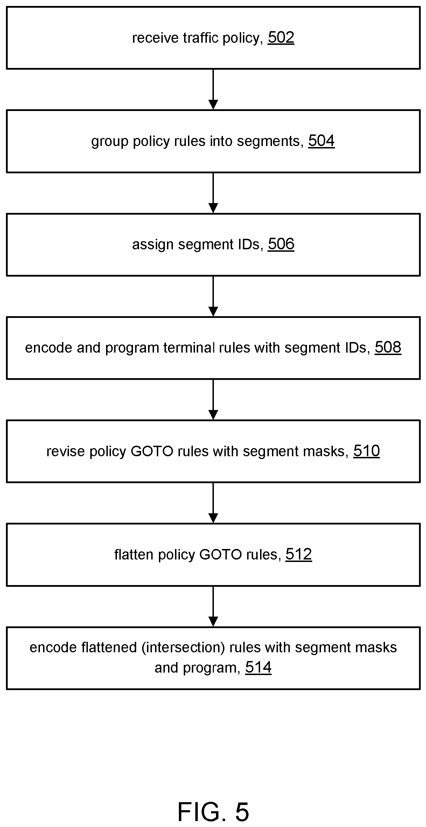

Referring to FIG. 5, the discussion will now turn to a high-level description of processing in a network device (e.g., 100, FIG. 1) to program a traffic policy having GOTO rules in accordance with the present disclosure. Depending on a given implementation, the processing may be performed entirely in the control plane or entirely in the data plane, or the processing may be divided between the control plane and the data plane. In some embodiments, the network device can include one or more processing units (circuits), which when operated, can cause the network device to perform processing in accordance with FIG. 5. Processing units (circuits) in the control plane, for example, can include general CPUs that operate by way of executing computer program code stored on a non-volatile computer readable storage medium (e.g., read-only memory); e.g., CPU 108 in the control plane (FIG. 1) can be a general CPU. Processing units (circuits) in the data plane can include specialized processors such as digital signal processors, field programmable gate arrays, application specific integrated circuits, and the like, that operate by way of executing computer program code or by way of logic circuits being configured for specific operations. For example, each of the packet processors 112a - 112p in the data plane (FIG. 1) can be a specialized processor. The operation and processing blocks described below are not necessarily executed in the order shown. Operations can be combined or broken out into smaller operations in various embodiments. Operations can be allocated for execution among one or more concurrently executing processes and/or threads.

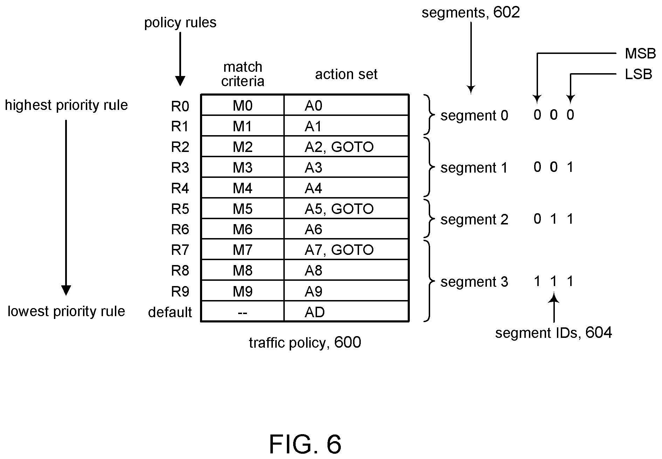

At operation 502, the network device can receive a traffic policy to be programmed in the hardware lookup tables of the network device. For discussion purposes, the traffic policy 600 shown in FIG. 6 will serve as the example for the description of operations that follows. The policy rules include terminal rules (e.g., R0, R1, R3) and GOTO rules (e.g., R2, R5, R7). The policy rules are prioritized; i.e., listed in the traffic policy in order from highest priority (rule R0) to lowest priority (default rule).

At operation 504, the network device can segment the policy rules of the traffic policy into groups of rules, shown in FIG. 6 as segments 602. In accordance with the present disclosure, segments are grouped based on the GOTO rules. A segment can be defined as a group of policy rules that begins with a GOTO rule and comprises one or more terminal rules in the order they appear in the traffic policy (preserving priority). Referring to the example in FIG. 6, segment 1 comprises GOTO rule R2 followed by terminal rules R3, R4. Segment 2 comprises GOTO rule R5 followed by terminal rule R6, and segment 3 comprises GOTO rule R7 followed by terminal rules R8, R9 and the default rule. Note that rule priority in each segment is preserved. An initial segment, segment 0, comprises the first group of rules in the policy just before the first GOTO rule (R2). The initial segment may or may not begin with a GOTO rule, depending on whether the first rule in the traffic policy is a GOTO rule or not.

At operation 506, the network device can define/assign a segment identifier (ID) for each segment. In some embodiments, the segment ID is a n-bit quantity. The example in FIG. 6 shows 3-bit segment IDs 604, where the least significant bit (LSB) and most significant bit (MSB) positions are illustrated. In some embodiments, the segment ID of a segment is encoded by setting the n least significant bits of the segment ID to '1', where n is the ordinal number of the segment beginning with zero. Accordingly, segment 0 is considered the zeroth segment and so none (0) of the bits of its segment ID are encoded with '1', the segment ID of segment 0 is '000'. Segment 1 is the first segment and so the LSB of its segment ID is encoded with a '1'. Segment 2 is the second segment and so the two LSBs of its segment ID are encoded with a '1'. Segment 3 is the third segment and so the three LSBs of its segment ID are encoded with a '1'.

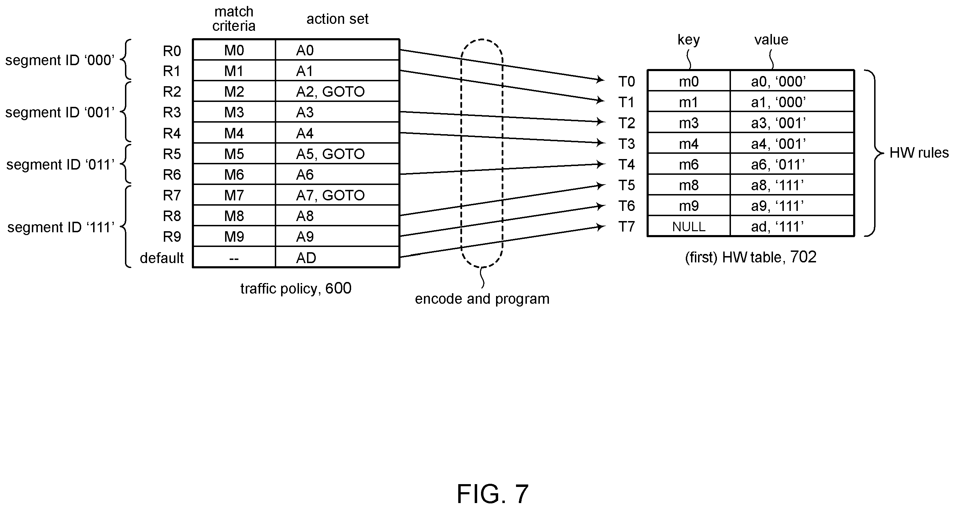

At operation 508, the network device can encode and program the terminal rules of the traffic policy with the segment IDs into a hardware lookup table. The terminal rules can be encoded along with their respective segment IDs and programmed into the lookup table. Referring to FIG. 7, the encoding and programming goes as follows for each terminal rule:

- Encode the match criteria of the rule, and program (store) the encoded match criteria into the key component of a corresponding entry (HW rule) in the HW table. FIG. 7 illustrates, for example, that the match criteria M0 for policy rule R0 is encoded as m0 and programmed in the key component of corresponding entry T0 in HW table 702.

- Encode both the action set and the associated segment ID of the rule, and program the encoded information in the value component of the corresponding entry in the HW table. In some embodiments, the encoded action set can be programmed in the first 'm' bits in the value component of the corresponding entry, and the n-bit segment ID can be programmed in the next 'n' bits in the value component. FIG. 7 illustrates that the action set A0 for policy rule R0 is encoded as a0 and programmed in the value component of corresponding entry T0 in HW table 702. Likewise, the segment ID of the segment that contains policy rule R0 is encoded and programmed in the value component of entry T0 in HW table 702.

At operation 510, the network device can revise the GOTO rules to include the segment IDs of the segments defined at operation 504. Because the terminal rules and the GOTO rules are programmed in separate HW tables (e.g., HW tables 304, 306, FIG. 3), the terminal rules and the GOTO rules can be linked together using the segment IDs. More specifically, in some embodiments, the segment ID associated with a GOTO rule can be incorporated with its match criteria in the form of a segment (link) mask that uses tri-state logic that includes an 'X' bit (don't care) in addition to the '0' bit and the '1' bit. In accordance with some embodiments, the following heuristic can be applied to revise each GOTO rule:

- Create/generate the segment mask for a given GOTO rule by replacing any '0' bits in its n-bit segment ID with 'X' (don't care bit).
- Revise the given GOTO rule by combining the segment mask with its match criteria. The action set is unaffected.

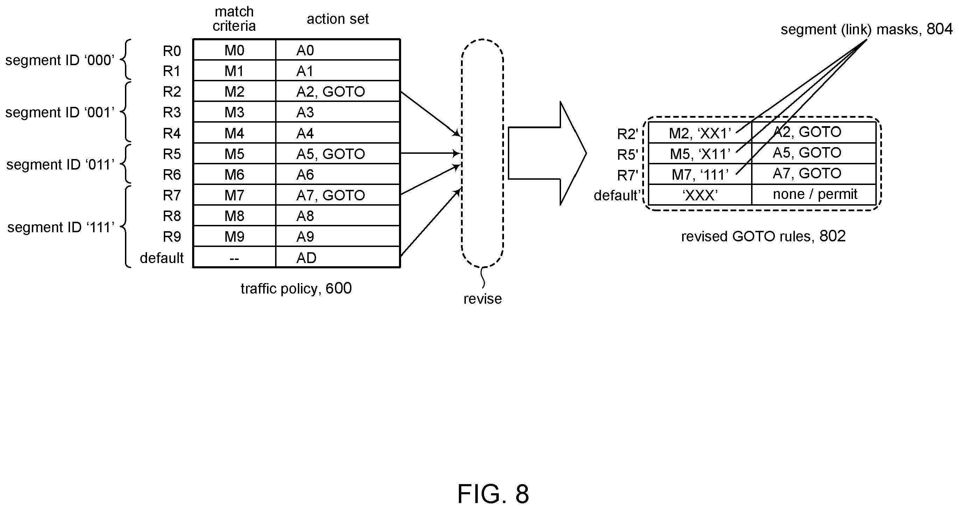

Referring to FIG. 8, for example, the segment ID of GOTO rule R2 is '001', and so the segment mask will be 'XX1' and the match criteria in the revised GOTO rule R2' comprises M2 and the segment mask 'XX1'. Likewise, the segment ID of GOTO rule R5 is '011', and so the segment mask will be 'X11', for GOTO rule R7 the segment mask is '111'. The segment mask for the default rule is 'XXX', which is the match criterion for the revised default rule.

The segment mask operates as follows. The segment mask is bitwise logically AND'd (&) with a segment ID, where the 'X' bit will always evaluate to TRUE. For example, suppose the segment mask is 'XX1'. This mask will match on a segment ID whose least significant bit is '1' irrespective of the value of the other bits. For instance, suppose the segment ID = '000', then the expression:

'XX1' & '000',

will evaluate to FALSE because the least significant bit in the segment ID is '0'. On the other hand, if the segment ID = '001', then the expression:

'XX1' & '001',

will evaluate to TRUE because the least significant bit in the segment ID is '1', irrespective of the '0' bits. Likewise, if the segment ID = '011', then the expression:

'XX1' & '011',

will also evaluate to TRUE, again because the least significant bit in the segment ID is '1', irrespective of the other bits.

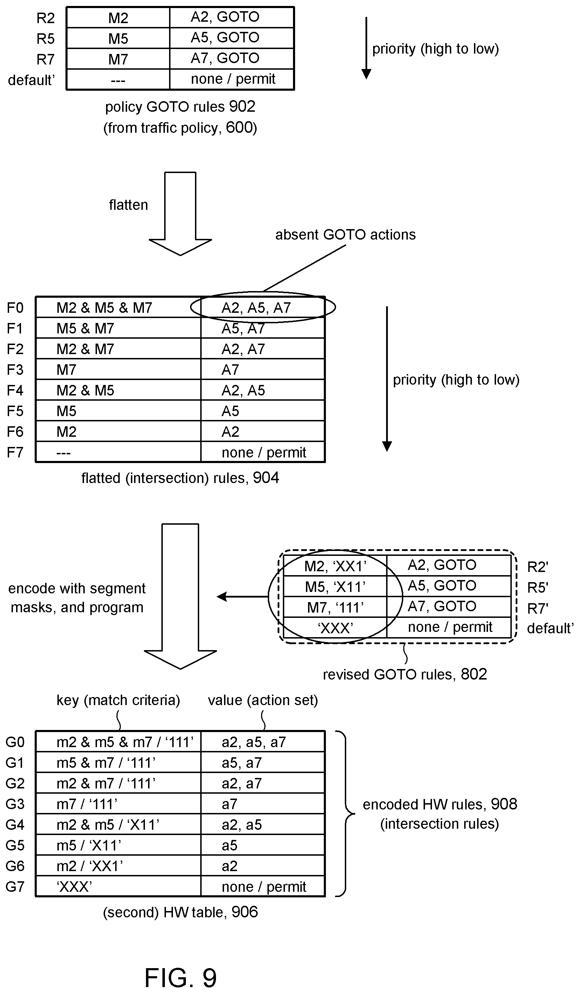

At operation 512, the network device can process the revised GOTO rules to generate corresponding flattened (intersection) rules that do not include the GOTO action. As explained above, the hardware lookup tables do not implement the branching action of the GOTO action. The GOTO rules in the traffic policy can be flattened to produce a corresponding set of flattened policy rules that have the same flow semantics as in the original traffic policy but without the GOTO actions. Techniques for flattening GOTO rules are disclosed in commonly owned, pending U.S. App. No. 17/476,352, filed September 15, 2021 and U.S. App. No.17/844,255, filed June 20, 2022, the content of both of which are incorporated herein by reference in their entirety for all purposes. FIG. 9 shows flattened rules 904 generated from the GOTO rules 902 in traffic policy 600 processed in accordance with processing disclosed in U.S. App. No. 17/476,352 and U.S. App. No.17/844,255.

Each flattened rule comprises a combination of one or more of the GOTO rules. For example, FIG. 9 shows that flattened rule F0 represents the combination of GOTO rules R2, R5, and R7. The match criteria of F0 comprises the combination of match criteria from its constituent GOTO rules, namely M2, M5, and M7. Likewise, the action set of F0 comprises the action sets from its constituent GOTO rules, namely A2, A5, and A7 and, notably, is absent any GOTO actions. On the other hand, flattened rule F7 represents GOTO rule R7, comprising its match criteria M7 and action set A7 without the GOTO action. It can be demonstrated that the flow semantics in flattened rules 904 (without GOTO actions) is the same as the flow semantics in GOTO rules 902 (with GOTO actions) for any combinations of match criteria; i.e., the actions that are executed when the flow for a combination of match criteria is traced in the GOTO rules 902 are the same actions that are executed when the flow is traced for that same combination of match criteria in the flattened rules 904.

At operation 514, the network device can encode the flattened rules in accordance with the present disclosure and program the encoded HW (intersection) rules 908 in HW table 906. In some embodiments in accordance with the present disclosure, the match criteria of a given flattened rule 904 can be encoded with the segment mask from a constituent GOTO rule. In some embodiments, the segment mask for encoding is the segment mask of the lowest priority GOTO rule among the constituent GOTO rules for that flattened rule. Referring to FIG. 9, for example, consider encoded rule G0 in HW table 906. Flattened rule F0 is encoded with a segment mask to generate the match criteria for rule G0. The match criteria in F0 is a combination of GOTO rules R2, R5, and R7. GOTO rule R7 is the lowest priority rule among the constituent GOTO rules R2, R5, and R7, and so F0 is encoded with the segment mask of R7, namely '111', to produce G0. Consider as another example encoded rule G4. Flattened rule F4 is encoded with a segment mask to generate the match criteria for G4. The match criteria in F4 is a combination of GOTO rules R2 and R5. GOTO rule R5 is the lower priority rule of the constituent GOTO rules R2 and R5, and so F4 encoded with the segment mask of R5, namely 'X11', to produce G4.

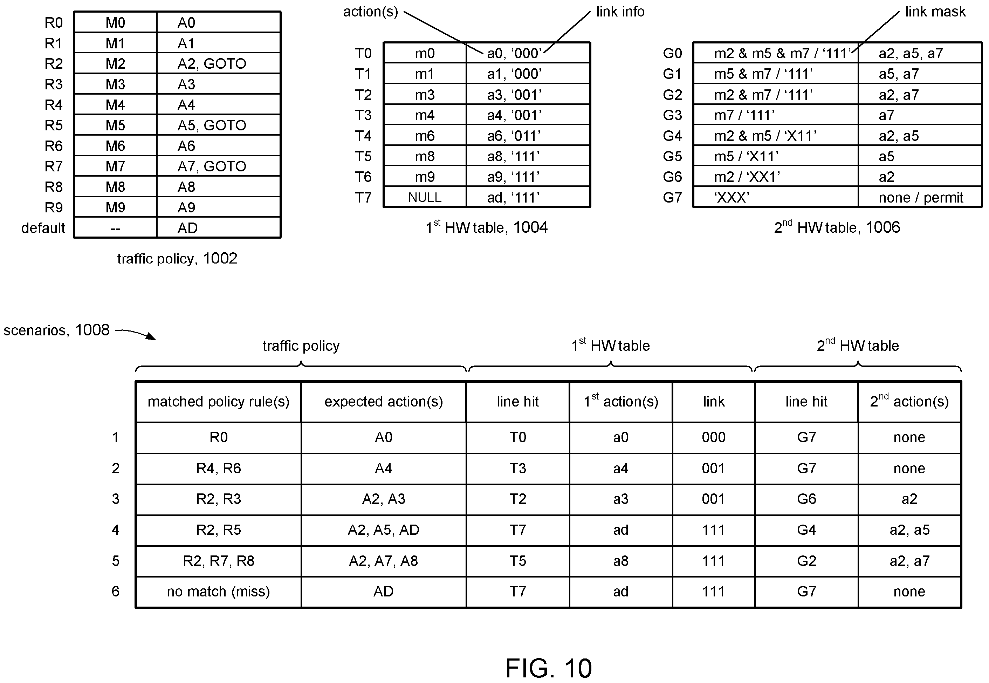

Referring to FIG. 10, processing packets in accordance with hardware lookup tables programmed in accordance with the present disclosure will now be described. Traffic policy 1002 represents a use-created traffic policy expressed in human-readable form. The traffic policy 1002 includes terminal rules and GOTO rules (e.g., R2, R5, R7). The traffic policy 1002 can be programmed in accordance with the present disclosure into a first HW table 1004 and a second HW table 1006.

A packet can be provided to the first HW table 1004 (see FIG. 3). When a line (entry) in HW table 1004 matches the packet, the HW table outputs the result (actions and link information) associated with the matched line. The link information would be used in the second HW table 1006 along with the packet to do a lookup. More specifically, HW table 1006 would apply its match criteria to the packet and its link mask to the link information from HW table 1004. A match (hit) on a line in HW table 1006 would occur if (and only if) the match criteria match the packet content and the logical AND of the link mask and the link information evaluates to TRUE. It is noted that HW tables 1004, 1006 will always produce a result, because of the default lines T7, G7.

The foregoing can be illustrated with scenarios table 1008 which shows various packet matching scenarios. The scenarios table 1008 shows different combinations of rules that a packet can match on and how the first and second HW tables can be processed, and shows that the actions produced by the HW tables are the same as the actions specified in the traffic policy:

- scenario 1 - Suppose the packet contents match on rule R0; the expected actions are in action set A0, and because R0 is a terminal rule no additional rules will be matched. Processing by HW tables 1004 and 1006 will be proceed as follows:

    ○ HW table 1004 will hit on line T0 and output action a0 and link info '000'; link info '000' is provided to HW table 1006.

    ○ HW table 1006 will hit on line G7 because the packet contents do not match any match criteria, and only link mask 'XXX' in G7 will evaluate to TRUE for link info '000'. G7 has no actions associated with it.

- scenario 2 - Suppose the packet contents match on rules R4 and R6; the expected actions are in action set A4 because R4 is a terminal rule and no additional rules will be matched even though the packet matches on R6; i.e., R4 is a higher priority rule than R6. Processing by HW tables 1004 and 1006 will be proceed as follows:

    ○ HW table 1004 will hit on line T3, the search terminates and the table outputs action a4 and link info '001'; line T4 corresponding to rule R6 is not reached. Link info '001' is provided to HW table 1006.

○ HW table 1006 will hit on line G7 as default because the packet contents do not match any of the match criteria of lines G0 to G6, even though the link masks in lines G0 to G6 evaluate to TRUE for link info '001'. The HW table will not output any actions.

- scenario 3 - Suppose the packet contents match on rules R2 and R3; the expected actions are action sets A2 and A3 because R2 is a GOTO rule, which continues the match, and R3 will be matched. The search terminates after R3 is matched. Processing by HW tables 1004 and 1006 will be proceed as follows:

    ○ HW table 1004 will hit on line T2 (match criteria for R3), the search terminates and table outputs action a3 and link info '001'; link info '001' is provided to HW table 1006.

    ○ HW table 1006 will hit on line G6 because the packet contents match the match criteria m2 in line G6, and the link mask 'XX1' in G6 evaluates to TRUE for link info '001'. HW table 1006 will output action a2.

- scenario 4 - Suppose the packet contents match on rules R2 and R5; the expected actions are action sets A2, A5, and AD because R2 is a GOTO rule, which continues the match, and R5 is a GOTO rule which again will continue the match. The search continues to the default rule, which always is a match. Processing by HW tables 1004 and 1006 will be proceed as follows:

    ○ HW table 1004 will hit on line T7, the default line, because the packet does not match on any lines in the HW table. The HW table outputs action ad and link info '111' which is provided to HW table 1006.

    ○ HW table 1006 will hit on line G4 because the packet contents match the match criteria m2 and m5 in line G4, and the link mask 'X11' in G4 evaluates to TRUE for link info '011'. HW table 1006 will output actions a2 and a5.

- scenario 5 - Suppose the packet contents match on rules R2, R7, R8; the expected actions are action sets A2, A7, and A8 because R2 is a GOTO rule, which continues the match, R7 is a GOTO rule which also continues the match, and R8 terminates the match. Processing by HW tables 1004 and 1006 will be proceed as follows:

    ○ HW table 1004 will hit on line T5 (match criteria for R8), the search terminates and the table outputs action a8 and link info '111' which is provided to HW table 1006.

 ◦ HW table 1006 will hit on line G2 because the packet contents match the match criteria m2 and m7 in line G2, and the link mask 'X11' in G2 evaluates to TRUE for link info '111'. HW table 1006 will output actions a2 and a7.

• scenario 6 - Suppose the packet contents do not match on any rules in the traffic policy. The expected action is AD because the result will be the default rule. Processing by HW tables 1004 and 1006 will be proceed as follows:

 ◦ HW table 1004 will hit on line T7, the default line, because the packet does not match on any lines in the HW table. The HW table outputs action ad and link info '111' which is provided to HW table 1006

 ◦ HW table 1006 will hit on line G7 as default because the packet contents do not match any of the match criteria of lines G0 to G6, even though the link masks in lines G0 to G6 evaluate to TRUE for link info '111'. The HW table will not output any actions.

The foregoing embodiments in accordance with the present disclosure segment and program a traffic policy into two hardware lookup tables, a first HW table (e.g., 304, FIG. 3) to program the terminal rules and a second HW table (e.g., 306) to program the GOTO rules. Linking information (e.g., 308, FIG. 3, 408, FIG. 4) coordinates the processing between the two lookup tables to preserve the flow semantics of the original traffic policy. The link information is encoded in the hardware lookup tables along with the match criteria and action sets of the traffic policy. As such, the link information competes for space in the hardware lookup tables used to encode the match criteria and action sets.

In some embodiments, the linking information are n-bit values. As described in the above illustrative embodiments, for example, the linking information is configured for encoding three GOTO rules in a traffic policy and includes 3-bit segment IDs (604, FIG. 6) and 3-bit segment masks (804. FIG. 8). Additional GOTO rules means additional bits to represent the linking information; more generally, n GOTO rules in a traffic policy use n-bit segment IDs and n-bit segment masks. From a practical point of view, n cannot be arbitrarily large due to the finite storage capacity of the hardware lookup tables.

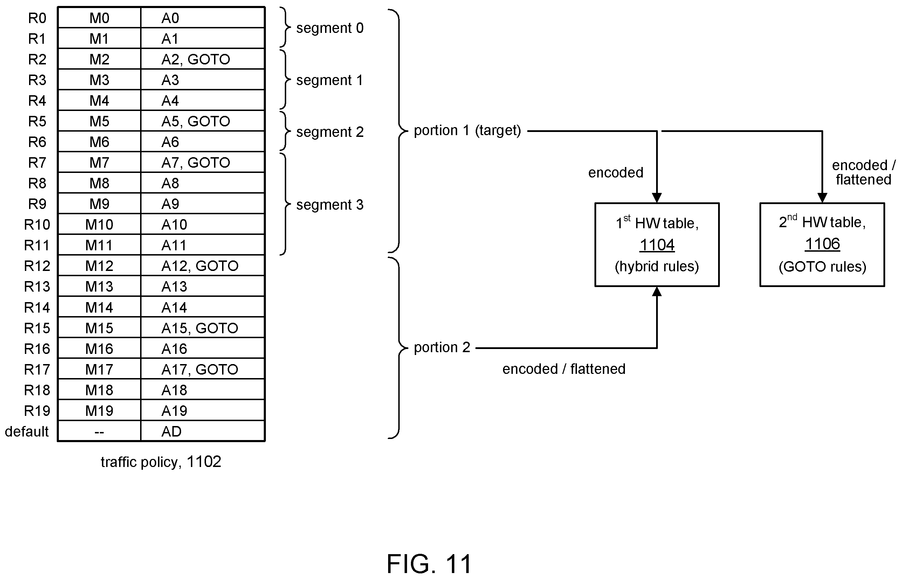

FIG. 11 illustrates programming a traffic policy in some embodiments where the linking information uses n-bit segment IDs and segment masks, but where the traffic policy comprises m > n GOTO rules. For discussion purposes, n is '3' and m is '6'. The processing can proceed as follows:

• Identify a portion of traffic policy 1102 that contains n GOTO rules, and program that potion in accordance with the present disclosure. FIG. 11, for example, shows portion 1 of the traffic policy 1102 is processed in accordance with the present disclosure. The terminal rules in portion 1 are programmed into the first HW table 1104, and the GOTO rules in portion 1 are programmed into the second HW table 1106.

• Program the remaining portion (portion 2) of traffic policy 1102 in accordance with the flattening operations disclosed in U.S. App. No. 17/476,352 and U.S. App. No.17/844,255. Portion 2 can be the portion of traffic policy 1102 that begins with the $(n+1)^{th}$ GOTO rule. The flattening of portion 2 is performed in accordance with U.S. App. No. 17/476,352 and U.S. App. No.17/844,255 on the full set of rules (terminal rules and GOTO rules) in portion 2, without first separating the terminal rules from the GOTO rules. The flattened rules comprising encoded terminal rules and GOTO rules from portion 2 of traffic policy 1102 are then programmed into the first HW table 1104.

As shown in FIG. 11, the portion of the traffic policy containing the n GOTO rules to be programmed in accordance with the present disclosure (call it the target), can be the top portion of the traffic policy that contains the first n GOTO rules. In some embodiments, the target can be the bottom of the traffic policy that contains the last n GOTO rules.

Further Examples

Features described above as well as those claimed below may be combined in various ways without departing from the scope hereof. The following examples illustrate some possible, non-limiting combinations:
Features described above as well as those claimed below may be combined in various ways without departing from the scope hereof. The following examples illustrate some possible, non-limiting combinations:

 (A1) A method in a network device, the method comprising: receiving a traffic policy comprising an ordered list of rules including terminal rules and GOTO rules, each terminal rule and GOTO rule comprising match criteria and an action set, wherein the action set of a GOTO rule includes a GOTO action; partitioning the ordered list of rules into a plurality of segments, wherein each segment begins with a GOTO rule followed by one or more terminal rules, each segment being associated with a segment identifier (ID); programming the terminal rules in corresponding hardware (HW) entries in a first HW table, wherein each HW entry comprises a key component comprising match criteria of the corresponding terminal rule and a value component comprising the action set and the segment ID associated with the corresponding terminal rule; generating a plurality of intersection rules, each intersection rule representing a combination of one or more of the GOTO rules ("GOTO rule(s)"), and comprising: the match criteria of the GOTO rule(s); and the action sets of the GOTO rule(s) absent the GOTO actions; generating a plurality of hardware rules, each hardware rule representing a corresponding intersection rule, and comprising: a first encoding that represents the match criteria of the GOTO rule(s) of the corresponding intersection rule and a segment mask of the segment ID of one of the of the GOTO rule(s); and a second encoding that represents the action sets of the GOTO rule(s) of the corresponding intersection rule absent the GOTO actions; and programming the plurality of hardware rules in corresponding HW entries in a second HW table.

(A2) The method denoted as (A1), wherein the terminal rules are programmed in the first HW table in the same order as they appear in traffic policy.

(A3) The method denoted as any of (A1) through (A2), wherein the plurality of intersection rules preserves the flow semantics of the corresponding GOTO rules in the traffic policy.

(A4) The method denoted as any of (A1) through (A3), wherein only the least significant n bits of the segment ID of the nth segment are set to '1'.

(A5) The method denoted as any of (A1) through (A4), wherein the segment mask of a given segment ID is generated by replacing '0' bits of the given segment ID with a don't-care bits.

(A6) The method denoted as any of (A1) through (A5), wherein the segment mask that is encoded in a given hardware rule is the segment mask of the segment of the lowest priority GOTO rule among the GOTO rule(s) of the intersection rule that corresponds to the given hardware rule.

(A7) The method denoted as any of (A1) through (A6), wherein the GOTO action in a matched policy rule in the traffic policy is an action that specifies to continue matching policy rules in the traffic policy that follows the matched policy rule.

(A8) The method denoted as any of (A1) through (A7), wherein the traffic policy is defined by a user.

(A9) The method denoted as any of (A1) through (A8), further comprising: receiving an ingress packet; outputting a first matched rule from the first HW table based on contents of the ingress packet; applying any actions specified in the action set of the first matched result; outputting a second matched rule from the second HW table based on contents of the ingress packet and the segment ID in the action set of the first matched rule; and applying any actions specified in the action set of the second matched result.

(B1) A network device comprising: one or more computer processors; and a computer-readable storage device comprising instructions for controlling the one or more computer processors to: receive a traffic policy comprising a list of policy rules including terminal rules and GOTO rules; identify segments in the traffic policy, wherein each segment begins with a GOTO rule followed by one or more terminal rules, each segment being associated with a segment identifier (ID); program the terminal rules in corresponding hardware (HW) entries of a first HW table, wherein each HW entry encodes the segment ID associated with the corresponding terminal rule; generate a plurality of intersection rules, each intersection rule representing a combination of one or more of the GOTO rules; program the intersection rules in corresponding hardware (HW) entries of a second HW table, wherein each HW entry encodes a segment mask based on the segment ID associated with one of the one or more of GOTO rules of the corresponding intersection rule.

(B2) The network device denoted as (B1), wherein the segment ID is a multi-bit value, wherein only the least significant n bits of the segment ID of an nth segment are set to '1' and remaining bits are set to '0'.

(B3) The network device denoted as any of (B1) through (B2), wherein the segment mask of the nth segment is generated by replacing the '0' bits in the segment ID of the nth segment with don't-care bits.

(B4) The network device denoted as any of (B1) through (B3), wherein the policy rules in the traffic policy are listed in order of priority, wherein the segment mask that is encoded in a given HW entry in the second HW table is the segment mask of the segment associated with the lowest priority GOTO rule among the GOTO rule(s) of the intersection rule that corresponds to the given HW entry.

(B5) The network device denoted as any of (B1) through (B4), wherein the segment ID is an n-bit value, wherein the traffic policy comprises m GOTO rules (m > n), wherein the computer-readable storage device further comprises instructions for controlling the one or more computer processors to: program terminal and intersection rules associated with the first n GOTO rules of the traffic policy into the first and second HW tables, respectively; and program remaining terminal and GOTO rules of the traffic policy in the first HW table.

(C1) A method in a network device, the method comprising: receiving a traffic policy comprising a list of policy rules including terminal rules and GOTO rules; identifying segments in the traffic policy, wherein each segment begins with a GOTO rule followed by one or more terminal rules, each segment being associated with a segment identifier (ID); programming the terminal rules in corresponding hardware (HW) entries of a first HW table, wherein each HW entry encodes the segment ID associated with the corresponding terminal rule; generating a plurality of intersection rules, each intersection rule representing a combination of one or more of the GOTO rules; programming the intersection rules in corresponding hardware (HW) entries of a second HW table, wherein each HW entry encodes a segment mask based on the segment ID associated with one of the one or more of GOTO rules of the corresponding intersection rule.

(C2) The method denoted as (C1), wherein the segment ID is a multi-bit value, wherein only the least significant n bits of the segment ID of an nth segment are set to '1' and remaining bits are set to '0'.

(C3) The method denoted as any of (C1) through (C2), wherein the segment mask of the nth segment is generated by replacing the '0' bits in the segment ID of the nth segment with don't-care bits.

(C4) The method denoted as any of (C1) through (C3), wherein the policy rules in the traffic policy are listed in order of priority, wherein the segment mask that is encoded in a given HW entry in the second HW table is the segment mask of the segment associated with the lowest priority GOTO rule among the GOTO rule(s) of the intersection rule that corresponds to the given HW entry.

(C5) The method denoted as any of (C1) through (C4), wherein the terminal rules are programmed in the first HW table in the same order as they appear in traffic policy.

(C6) The method denoted as any of (C1) through (C5), wherein the segment ID is an n-bit value, wherein the traffic policy comprises m GOTO rules (m > n), the method further comprising: programming terminal and intersection rules associated with the first n GOTO rules of the traffic policy into the first and second HW tables, respectively; and programming remaining terminal and GOTO rules of the traffic policy in the first HW table.

The above description illustrates various embodiments of the present disclosure along with examples of how aspects of the present disclosure may be implemented. The above examples and embodiments should not be deemed to be the only embodiments, and are presented to illustrate the flexibility and advantages of the present disclosure as defined by the following claims. Based on the above disclosure and the following claims, other arrangements, embodiments, implementations and equivalents may be employed without departing from the scope of the disclosure as defined by the claims.

**Claims**

1. A method in a network device, the method comprising:

    receiving a traffic policy comprising a list of policy rules including terminal rules and GOTO rules;
    identifying segments in the traffic policy, wherein each segment begins with a GOTO rule followed by one or more terminal rules, each segment being associated with a segment identifier (ID);
    programming the terminal rules in corresponding hardware (HW) entries of a first HW table, wherein each HW entry encodes the segment ID associated with the corresponding terminal rule;
    generating a plurality of intersection rules, each intersection rule representing a combination of one or more of the GOTO rules;
    programming the intersection rules in corresponding hardware (HW) entries of a second HW table, wherein each HW entry encodes a segment mask based on the segment ID associated with one of the one or more of GOTO rules of the corresponding intersection rule.

2. The method of claim 1, wherein the segment ID is a multi-bit value, wherein only the least significant n bits of the segment ID of an $n^{th}$ segment are set to '1' and remaining bits are set to '0'.

3. The method of claim 2, wherein the segment mask of the $n^{th}$ segment is generated by replacing the '0' bits in the segment ID of the $n^{th}$ segment with don't-care bits.

4. The method of any preceding claim, wherein the policy rules in the traffic policy are listed in order of priority, wherein the segment mask that is encoded in a given HW entry in the second HW table is the segment mask of the segment associated with the lowest priority GOTO rule among the GOTO rule(s) of the intersection rule that corresponds to the given HW entry.

5. The method of any preceding claim, wherein the terminal rules are programmed in the first HW table in the same order as they appear in traffic policy.

6. The method of any preceding claim, wherein the segment ID is an n-bit value, wherein the traffic policy comprises m GOTO rules (m > n), the method further comprising:

    programming terminal and intersection rules associated with the first n GOTO rules of the traffic policy into the first and second HW tables, respectively; and
    programming remaining terminal and GOTO rules of the traffic policy in the first HW table.

7. The method of any preceding claim, wherein each terminal rule and GOTO rule in the received traffic policy comprises match criteria and an action set, and wherein the action set of a GOTO rule includes a GOTO action.

8. The method of claim 7, wherein each HW entry in the first HW table comprises a key component comprising match criteria of the corresponding terminal rule and a value component comprising the action set and the segment ID associated with the corresponding terminal rule.

9. The method of claim 7 or claim 8, wherein each intersection rule that is generated comprises:

    the match criteria of the GOTO rule(s); and
    the action sets of the GOTO rule(s) absent the GOTO actions.

10. The method of any of claims 7 to 9, wherein programming the intersection rules in corresponding HW entries of the second HW table, comprises:

    generating a plurality of hardware rules, each hardware rule representing a corresponding intersection rule, and comprising:

        a first encoding that represents the match criteria of the GOTO rule(s) of the corresponding intersection rule and a segment mask of the segment ID of one of the of the GOTO rule(s); and
        a second encoding that represents the action sets of the GOTO rule(s) of the corresponding intersection rule absent the GOTO actions; and

    programming the plurality of hardware rules in corresponding HW entries in a second HW table.

11. The method of any of claims 7 to 10, wherein the plurality of intersection rules preserves the flow semantics of the corresponding GOTO rules in the traffic policy.

12. The method of any of claims 7 to 11, wherein the GOTO action in a matched policy rule in the traffic policy is an action that specifies to continue matching policy rules in the traffic policy that follows the matched policy rule.

13. The method of any preceding claim, wherein the traffic policy is defined by a user.

14. The method of any preceding claim, further comprising:

    receiving an ingress packet;
    outputting a first matched rule from the first HW table based on contents of the ingress packet;
    applying any actions specified in the action set of the first matched result;
    outputting a second matched rule from the second HW table based on contents of the ingress packet and the segment ID in the action set of the first matched rule; and
    applying any actions specified in the action set of the second matched result.

15. A network device comprising:

    one or more computer processors; and
    a computer-readable storage device comprising instructions for controlling the one or more computer processors to perform a method as set out in at least one preceding claim.

FIG. 1

network device, 100 (e.g., switch, router, etc.)

management module, 102 (supervisor)

Storage Subsystem 120

Memory Subsystem 122

ROM 124    RAM 126

File Storage Subsystem 128

CPU(s), 108

user

traffic policy, 132 (policy rules)

encoded/flattened rules, 134

130

interconnect, 104

control plane

data plane

memory 114

crossbar, 118

I/O module, 106a

packet processor 112a

I/O module, 106p

packet processor 112p

front panel, 110

port, 110a

port, 110n

13

EP 4 712 427 A1

match criteria, 202a

action set, 202b

highest priority rule

| | | |
|---|---|---|
| R0 | M0 | A0 |
| R1 | M1 | A1 |
| R2 | M2 | A2, GOTO |
| R3 | M3 | A3 |
| R4 | M4 | A4 |
| R5 | M5 | A5, GOTO |
| R6 | M6 | A6 |
| R7 | M7 | A7, GOTO |
| R8 | M8 | A8 |
| R9 | M9 | A9 |
| default | -- | AD |

policy rules, 202

lowest priority rule

GOTO rules

terminal rules

traffic policy, 200 (policy rules)

FIG. 2

FIG. 3

key, 402   value, 404

| | key | value |
|---|---|---|
| T0 | m0 | a0, '000' |
| T1 | m1 | a1, '000' |
| T2 | m3 | a3, '001' |
| T3 | m4 | a4, '001' |
| T4 | m6 | a6, '011' |
| T5 | m8 | a8, '111' |
| T6 | m9 | a9, '111' |
| T7 | NULL | ad, '111' |

link info, 308

first HW table, 304
(HW rules, 324)

| | match criteria, 202a | action set, 202b |
|---|---|---|
| R0 | M0 | A0 |
| R1 | M1 | A1 |
| R2 | M2 | A2, GOTO |
| R3 | M3 | A3 |
| R4 | M4 | A4 |
| R5 | M5 | A5, GOTO |
| R6 | M6 | A6 |
| R7 | M7 | A7, GOTO |
| R8 | M8 | A8 |
| R9 | M9 | A9 |
| default | -- | AD |

decreasing priority

traffic policy, 200
(policy rules, 202)

encoded

encode / flatten
(FIG. 5)

encoded / flattened

link masks, 408

key, 402   value, 404

| | key | value |
|---|---|---|
| G0 | m2 & m5 & m7 / '111' | a2, a5, a7 |
| G1 | m5 & m7 / '111' | a5, a7 |
| G2 | m2 & m7 / '111' | a2, a7 |
| G3 | m7 / '111' | a7 |
| G4 | m2 & m5 / 'X11' | a2, a5 |
| G5 | m5 / 'X11' | a5 |
| G6 | m2 / 'XX1' | a2 |
| G7 | 'XXX' | none / permit |

second HW table, 306
(HW rules, 326)

FIG. 4

receive traffic policy, 502

↓

group policy rules into segments, 504

↓

assign segment IDs, 506

↓

encode and program terminal rules with segment IDs, 508

↓

revise policy GOTO rules with segment masks, 510

↓

flatten policy GOTO rules, 512

↓

encode flattened (intersection) rules with segment masks and program, 514

FIG. 5

segments, 602

policy rules

match criteria | action set

MSB

LSB

highest priority rule

| | match criteria | action set | |
|---|---|---|---|
| R0 | M0 | A0 | segment 0    0 0 0 |
| R1 | M1 | A1 | |
| R2 | M2 | A2, GOTO | segment 1    0 0 1 |
| R3 | M3 | A3 | |
| R4 | M4 | A4 | |
| R5 | M5 | A5, GOTO | segment 2    0 1 1 |
| R6 | M6 | A6 | |
| R7 | M7 | A7, GOTO | segment 3    1 1 1 |
| R8 | M8 | A8 | |
| R9 | M9 | A9 | |
| default | -- | AD | |

lowest priority rule

traffic policy, 600

segment IDs, 604

FIG. 6

EP 4 712 427 A1

|  | match criteria | action set |
|---|---|---|
| R0 | M0 | A0 |
| R1 | M1 | A1 |
| R2 | M2 | A2, GOTO |
| R3 | M3 | A3 |
| R4 | M4 | A4 |
| R5 | M5 | A5, GOTO |
| R6 | M6 | A6 |
| R7 | M7 | A7, GOTO |
| R8 | M8 | A8 |
| R9 | M9 | A9 |
| default | -- | AD |

segment ID '000' { R0, R1

segment ID '001' { R2, R3, R4

segment ID '011' { R5, R6

segment ID '111' { R7, R8, R9

traffic policy, 600

encode and program

|  | key | value |
|---|---|---|
| T0 | m0 | a0, '000' |
| T1 | m1 | a1, '000' |
| T2 | m3 | a3, '001' |
| T3 | m4 | a4, '001' |
| T4 | m6 | a6, '011' |
| T5 | m8 | a8, '111' |
| T6 | m9 | a9, '111' |
| T7 | NULL | ad, '111' |

HW rules

(first) HW table, 702

FIG. 7

EP 4 712 427 A1

|          | match<br>criteria | action set |
|----------|-------------------|------------|
| R0       | M0                | A0         |
| R1       | M1                | A1         |
| R2       | M2                | A2, GOTO   |
| R3       | M3                | A3         |
| R4       | M4                | A4         |
| R5       | M5                | A5, GOTO   |
| R6       | M6                | A6         |
| R7       | M7                | A7, GOTO   |
| R8       | M8                | A8         |
| R9       | M9                | A9         |
| default  | --                | AD         |

segment ID '000'

segment ID '001'

segment ID '011'

segment ID '111'

traffic policy, 600

revise

segment (link) masks, 804

| R2'      | M2, 'XX1' | A2, GOTO      |
|----------|-----------|---------------|
| R5'      | M5, 'X11' | A5, GOTO      |
| R7'      | M7, '111' | A7, GOTO      |
| default' | 'XXX'     | none / permit |

revised GOTO rules, 802

FIG. 8

| | | |
|---|---|---|
| R2 | M2 | A2, GOTO |
| R5 | M5 | A5, GOTO |
| R7 | M7 | A7, GOTO |
| default' | --- | none / permit |

priority (high to low)

policy GOTO rules 902
(from traffic policy, 600)

flatten

absent GOTO actions

| | | |
|---|---|---|
| F0 | M2 & M5 & M7 | A2, A5, A7 |
| F1 | M5 & M7 | A5, A7 |
| F2 | M2 & M7 | A2, A7 |
| F3 | M7 | A7 |
| F4 | M2 & M5 | A2, A5 |
| F5 | M5 | A5 |
| F6 | M2 | A2 |
| F7 | --- | none / permit |

priority (high to low)

flatted (intersection) rules, 904

| | | |
|---|---|---|
| M2, 'XX1' | A2, GOTO | R2' |
| M5, 'X11' | A5, GOTO | R5' |
| M7, '111' | A7, GOTO | R7' |
| 'XXX' | none / permit | default' |

encode with segment
masks, and program

revised GOTO rules, 802

key (match criteria)     value (action set)

| | | |
|---|---|---|
| G0 | m2 & m5 & m7 / '111' | a2, a5, a7 |
| G1 | m5 & m7 / '111' | a5, a7 |
| G2 | m2 & m7 / '111' | a2, a7 |
| G3 | m7 / '111' | a7 |
| G4 | m2 & m5 / 'X11' | a2, a5 |
| G5 | m5 / 'X11' | a5 |
| G6 | m2 / 'XX1' | a2 |
| G7 | 'XXX' | none / permit |

encoded HW rules, 908
(intersection rules)

(second) HW table, 906

FIG. 9

| R0 | M0 | A0 |
|---|---|---|
| R1 | M1 | A1 |
| R2 | M2 | A2, GOTO |
| R3 | M3 | A3 |
| R4 | M4 | A4 |
| R5 | M5 | A5, GOTO |
| R6 | M6 | A6 |
| R7 | M7 | A7, GOTO |
| R8 | M8 | A8 |
| R9 | M9 | A9 |
| default | -- | AD |

traffic policy, 1002

action(s)    link info

| T0 | m0 | a0, '000' |
|---|---|---|
| T1 | m1 | a1, '000' |
| T2 | m3 | a3, '001' |
| T3 | m4 | a4, '001' |
| T4 | m6 | a6, '011' |
| T5 | m8 | a8, '111' |
| T6 | m9 | a9, '111' |
| T7 | NULL | ad, '111' |

1st HW table, 1004

link mask

| G0 | m2 & m5 & m7 / '111' | a2, a5, a7 |
|---|---|---|
| G1 | m5 & m7 / '111' | a5, a7 |
| G2 | m2 & m7 / '111' | a2, a7 |
| G3 | m7 / '111' | a7 |
| G4 | m2 & m5 / 'X11' | a2, a5 |
| G5 | m5 / 'X11' | a5 |
| G6 | m2 / 'XX1' | a2 |
| G7 | 'XXX' | none / permit |

2nd HW table, 1006

scenarios, 1008

| | matched policy rule(s) | expected action(s) | line hit | 1st action(s) | link | line hit | 2nd action(s) |
|---|---|---|---|---|---|---|---|
| | | | traffic policy | 1st HW table | | | 2nd HW table |
| 1 | R0 | A0 | T0 | a0 | 000 | G7 | none |
| 2 | R4, R6 | A4 | T3 | a4 | 001 | G7 | none |
| 3 | R2, R3 | A2, A3 | T2 | a3 | 001 | G6 | a2 |
| 4 | R2, R5 | A2, A5, AD | T7 | ad | 111 | G4 | a2, a5 |
| 5 | R2, R7, R8 | A2, A7, A8 | T5 | a8 | 111 | G2 | a2, a7 |
| 6 | no match (miss) | AD | T7 | ad | 111 | G7 | none |

FIG. 10

EP 4 712 427 A1

| | | | |
|---|---|---|---|
| R0 | M0 | A0 | } segment 0 |
| R1 | M1 | A1 | |
| R2 | M2 | A2, GOTO | } segment 1 |
| R3 | M3 | A3 | |
| R4 | M4 | A4 | |
| R5 | M5 | A5, GOTO | } segment 2 |
| R6 | M6 | A6 | |
| R7 | M7 | A7, GOTO | } segment 3 |
| R8 | M8 | A8 | |
| R9 | M9 | A9 | |
| R10 | M10 | A10 | |
| R11 | M11 | A11 | |
| R12 | M12 | A12, GOTO | |
| R13 | M13 | A13 | |
| R14 | M14 | A14 | |
| R15 | M15 | A15, GOTO | |
| R16 | M16 | A16 | |
| R17 | M17 | A17, GOTO | |
| R18 | M18 | A18 | |
| R19 | M19 | A19 | |
| default | -- | AD | |

traffic policy, 1102

portion 1 (target)

encoded

encoded / flattened

1st HW table, 1104 (hybrid rules)

2nd HW table, 1106 (GOTO rules)

portion 2

encoded / flattened

EP 4 712 427 A1

FIG. 11

Europäisches
Patentamt
European
Patent Office
Office européen
des brevets

**EUROPEAN SEARCH REPORT**

Application Number

EP 25 20 2064

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/147277 A1 (ARISTA NETWORKS INC [US]) 3 August 2023 (2023-08-03) | 1-6, 13-15 | INV. H04L43/026 |
| A | * paragraph [0022] - paragraph [0073]; claims; figures * | 7-12 | H04L43/028 |
| | ----- | | ADD. |
| Y | YANG SHU ET AL: "An efficient pipeline processing scheme for programming Protocol-independent Packet Processors", JOURNAL OF NETWORK AND COMPUTER APPLICATIONS, ACADEMIC PRESS, NEW YORK, NY, US, vol. 171, 2 September 2020 (2020-09-02), XP086328324, ISSN: 1084-8045, DOI: 10.1016/J.JNCA.2020.102806 [retrieved on 2020-09-02] * the whole document * | 1,15 | H04L47/20 |
| | ----- | | |
| Y | SCHIFF LIRON ET AL: "Orange: multi field openflow based range classifier", 2015 ACM/IEEE SYMPOSIUM ON ARCHITECTURES FOR NETWORKING AND COMMUNICATIONS SYSTEMS (ANCS), IEEE, 7 May 2015 (2015-05-07), pages 63-73, XP032780232, DOI: 10.1109/ANCS.2015.7110121 [retrieved on 2015-05-18] | 1,15 | |
| A | * the whole document * | 2-14 | |
| | ----- | | |

**TECHNICAL FIELDS SEARCHED (IPC)**

H04L

The present search report has been drawn up for all claims

| Place of search | Date of completion of the search | Examiner |
|---|---|---|
| Munich | 3 February 2026 | Ceccarini, Giulio |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...........................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 20 2064

This annex lists the patent family members relating to the patent documents cited in  the above-mentioned European search report.
The members are as contained in the European Patent Office EDP file on
The European Patent Office is in no way liable for these particulars which are merely given for the purpose of information.

03-02-2026

| Patent document cited in search report | Publication date | Patent family member(s) | | Publication date |
|---|---|---|---|---|
| WO 2023147277 A1 | 03-08-2023 | EP | 4470182 A1 | 04-12-2024 |
| | | US | 2023077594 A1 | 16-03-2023 |
| | | US | 2023082978 A1 | 16-03-2023 |
| | | WO | 2023147277 A1 | 03-08-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 47635221
- US 84425522

- US 476352
- US 844255